# EUROPEAN PATENT SPECIFICATION

(11) **EP 1 759 047 B1**
(45) Date of publication and mention of the grant of the patent: **21.11.2012**
(21) Application number: 05765933.6
(22) Date of filing: 23.06.2005
(51) Int. Cl.: D06F 37/30, H02K 1/32, H02K 5/173, H02K 9/06

(54) **MOTOR OF WASHING MACHINE**
WASCHMASCHINENMOTOR
MOTEUR DE MACHINE A LAVER

(30) Priority: 24.06.2004 KR 2004047716
(43) Date of publication of application: 07.03.2007
(73) Proprietor: LG Electronics Inc., Seoul 150-721 (KR)
(72) Inventor: PARK, Yong Suck, Ilsindaedong Freevillage, Changwon-si, Gyeongsangnam-do 641-120 (KR)
(74) Representative: Vossius & Partner
(86) International application number: PCT/KR2005/001948
(87) International publication number: WO 2006/001639

(56) References cited:
- EP-A2- 1 450 468
- US-A- 5 907 206
- US-A- 6 060 851

## Description

### [Technical Field]

The present invention relates to a motor for a washing machine, and more particularly, to an outer rotor type induction motor for a washing machine, which has a simple structure to enable easy fabrication.

### [Background Art]

In general, the washing machine removes dirt from clothes, and beddings (hereafter called as laundry) held in a washing tub by using impact of water circulation and chemical action of detergent.

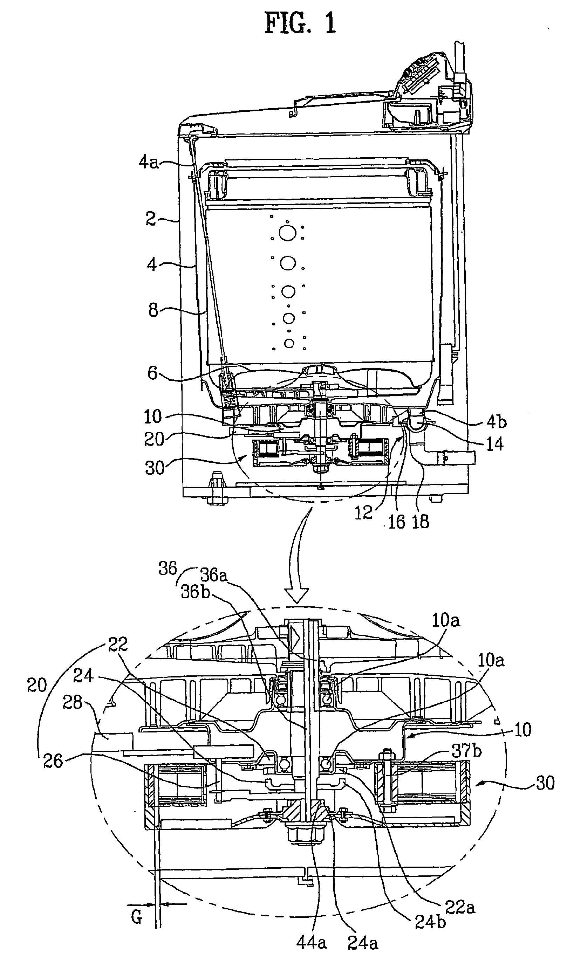

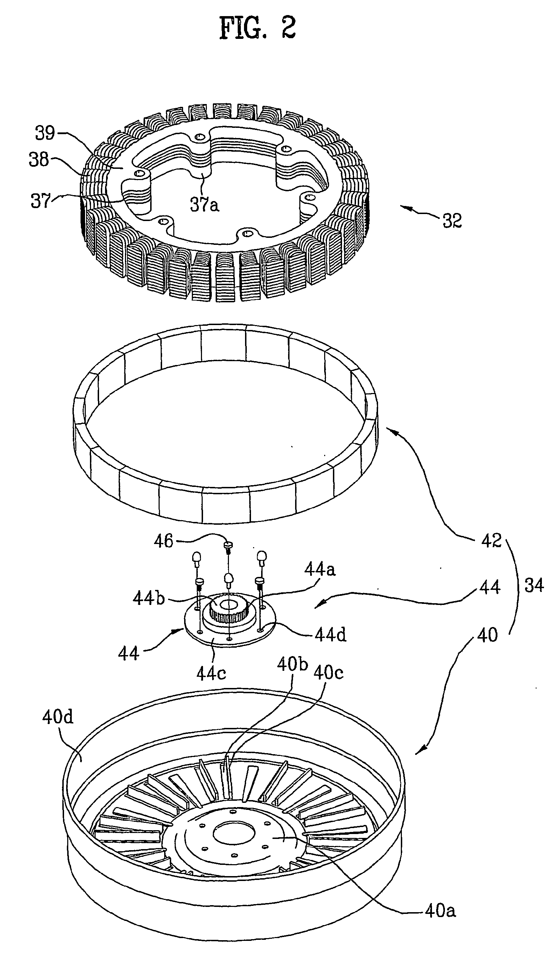

FIG. 1 illustrates a section of a related art washing machine, and FIG. 2 illustrates an exploded perspective view of the motor in FIG 1.

Referring to FIG. 1, the related art washing machine is provided with a cabinet 2 forming an exterior thereof, an outer tub 4 suspended in the cabinet 2 with supporting members 4a, having a space for holding washing water, an inner tub 8 rotatably mounted in the outer tub 4, having a pulsator 6 mounted on a bottom, and water holes in an sidewall, a motor 30 under the outer tub 4 for providing driving force for rotating the pulsator 6 and the inner tub 8, a bearing housing 10 fixedly secured to a center of an underside of the outer tub 4, for rotatably supporting a rotating shaft 36 of the motor 30, and a clutch mechanism 20 between the bearing housing 10 and the motor 30 for connecting/disconnecting driving force transmitted to the pulsator 6 and the inner tub 8.

The outer tub 4 has a drain unit 12 at a lower portion for discharging washing water held in the outer tub 4 to an outside of the washing machine.

The drain unit 12 is provided with a drain valve 14 in communication with a drain hole 4b in the outer tub 4, a drain motor 16 at one side of a lower portion of the outer tub, and a drain hose 18 for guiding washing water drained through the drain valve 14 to an outside of the washing machine.

Under the bearing housing 10 fixedly secured to the center of underside of the outer tub 4, there is a stator fixed secured thereto. There is a rotating shaft 36 of the motor 30 passed through an upper surface and a lower surface of the bearing housing 10, rotatably supported with bearings 10a at an upper side, and a lower side of an inside of the bearing housing 10.

The motor 30 is of an Outer Rotor Type BLDC Motor (Brushless DC Motor), enabling to rotate the pulsator 6, or the inner tub 8 at various speeds as the BLDC motor 30 controls power supplied thereto to control a speed of the motor 30.

The rotating shaft 36 of the motor 30 is provided with a hollow spinning shaft 36a having an upper end connected to the inner tub 8, and a washing shaft 36b rotatably mounted inside of the hollow spinning shaft 36a, having a lower end connected to the motor 30, and an upper end connected to the pulsator 6.

In the meantime, the clutch mechanism 20 is provided with a coupling stopper 22 fixedly secured to the underside of the bearing housing 10, a clutch coupling 24 coupled to a lower end of the spinning shaft 36a with a spline for enabling axial direction sliding, a clutch lever 26 having one side connected to the clutch coupling 24, for making the clutch coupling 24 to move in an axial direction to engage with the motor 30 or the coupling stopper 22, and a clutch motor 28 at the other side of the clutch lever 26 for operating the clutch lever 26.

The clutch coupling 24 has a first clutch gear 24a on an underside surface for engagement with a second clutch gear 44a on a rotor bushing 44 (see FIG. 2) of the motor 30, and a first locking gear 24b on an upper surface for engagement with a second locking gear 22a on the coupling stopper 22.

Accordingly, if the clutch lever 26 makes the clutch coupling 24 to move down, the first clutch gear 24a and the second clutch gear 44a are engaged, to transmit power from the motor 30 to the spinning shaft 36a, and if the clutch lever 26 makes the clutch coupling 24 to move up, the first locking gear 24b and the second locking gear 22a are engaged, to make power transmission from the motor 30 to the spinning shaft 36a impossible.

In above washing machine, if a DC power is applied to the motor 30, and the clutch mechanism 20 makes the clutch coupling 24 to engage with the coupling stopper 22, the power is transmitted only from the motor 30 to the pulsator 6 through the washing shaft 36b, and by controlling a speed of the motor 30, washing and rinsing of the laundry is performed by the pulsator 6.

If the DC power is applied to the motor 30, and the clutch mechanism 20 makes the clutch coupling 24 to engage with the motor 30, the power is transmitted from the motor 30 both to the pulsator 6 and the inner tub 8 at the same time through the washing shaft 36b and the spinning shaft 36a, and by driving the motor 30 at a high speed, both the pulsator 6 and the inner tub 8 run at a high speed, to extract water from the laundry.

In the meantime, referring to FIG. 2, the related art motor is provided with the stator 32 fixedly secured to the underside of the bearing housing 10, and a rotor 34 rotatably mounted to surround an outer side of the stator 32 so as to be rotatable by electro-magnetic force acting between the stator 32 and the rotor 34.

The stator 32 is provided with an annular core 37 having a stack of a plurality of steel pieces, and a coil 38 wound on the core 37 and connected to an external power source.

The core 37 has insulators 39 on an upper side and a lower side, and a plurality of fastening portions 37a formed along, and projected inward from, an inside circumference. Each of the fasting portions 37a has a fastening hole, for fastening to the underside of the bearing housing with a fastening bolt 37b.

The rotor 34 is provided with a rotor frame 40 to surround an outside circumference and an underside of the stator 32, a rotor magnet 42 mounted on an inside circumference of the rotor frame 40 so as to be rotatable by electro-magnetic force acting between the stator 32 and the rotor magnet 42, and a rotor bushing 44 at a center of a lower surface of the rotor frame 40, for fastening a lower end of the rotating shaft 36 thereto.

The rotor frame 40 of a cylindrical shape with an opened top is provided with a rotor magnet securing portion 40d on an inside surface for seating, and securing the rotor magnet 42, and a bushing securing portion 40a at a center of the lower surface for pass of the rotating shaft 36, and securing the rotor bushing 44 thereto.

On an outer side of the bushing securing portion 40a of the lower surface of the rotor frame 40, there are a plurality of lower air holes 40b and lower blades 40c arranged in a circumferential direction spaced from each other.

The lower blade 40c is on one side of the lower air hole 40b, and both the lower blade 40c and the lower air hole 40b are extended in a radial direction. Accordingly, when the rotor frame 40 rotates, air is blown into an inside of the motor 30 by the lower air holes 40b to cool the rotor 34 and the stator 32.

The rotor magnet 42 is a plurality of permanent magnets bonded to the rotor magnet securing portion 40d of the rotor frame 40 with adhesive opposite to the outside circumferential surface of the stator 32, to form a gap G (see FIG. 1) between the rotor magnet 42 and the stator 32.

The rotor bushing 44 is provided with a bushing portion 44b for placing a lower end of the washing shaft 36b of the rotating shaft 36 therein, having the second clutch gear 44a on an outside circumferential surface, and a flange portion 44c around the bushing portion 44b for securing to the bushing securing portion 40a of the rotor frame 40.

The bushing portion 44b is formed of a metal.

The flange portion 44c is a plastic injection molding for electric insulation between the bushing portion 44b and the rotor frame 40, and has fastening holes 44d in correspondence to the fastening holes in the bushing securing portion 40a, for fastening with fastening members 46.

However, the related art motor for a washing machine has problems in that the rotor 34 has a complicate structure in which the rotor magnet 42 is bonded to the magnet securing portion 40d with adhesive, the rotor bushing 44 is secured to the bushing securing portion 40a with a plurality of fastening members 46, and so on, and fabrication of the related art motor is difficult.

That is, because the rotor frame 40 has the rotor magnet securing portion 40d, the bushing securing portion 40a, and the plurality of the lower air holes 40b and the lower blades 40c for cooling the motor 30, and the rotor bushing 44 has the injection molded flange portion 44c with the fastening holes 44d, the rotor frame 40 and the rotor bushing 44 have complicate structures such that fabrication thereof is difficult.

Along with this, the securing of the rotor magnet 42 and the rotor bushing 44 to the rotor frame 40 respectively with adhesive and a plurality of fastening members 46 requires many rotor 32 assembly man-hours, and many additional components for assembly of the rotor 32.

In the meantime, outer rotor type induction motors also have above problems. That is, there are related art outer rotor type induction motors that a rotor bushing with above problems.

Moreover, alike the rotor magnet in the BLDC motor, the outer rotor type induction motor also has the problems of complicate structure difficult to fabricate, such as securing the rotor core to an inside of the rotor frame is difficult.

### [Disclosure]

### [Technical Problem]

An object of the present invention is to provide a motor for a washing machine, in which, different from the related art, a rotor core and rotor bushing of a rotor is formed as one body with a rotor frame, to reduce a number of components and simplify a fabrication process.

### [Technical Solution]

To achieve the object of the present invention, a motor for a washing machine includes a stator, and a rotor mounted to an outer side of the stator for rotating by an electromagnetic force between the stator and the rotor, wherein the rotor includes a rotor frame of plastic mounted to surround both an outer circumferential surface of the stator and a lower surface of the stator, a rotor core disposed on an inside circumferential surface of a sidewall of the rotor frame for generating a rotating power by an electromagnetic force between the stator and rotor core, and a rotor bushing of a metal at a center of a lower surface of the rotor frame, wherein the rotor core includes an annular core portion of a stack of a plurality of steel pieces, and a winding portion on the core portion for serving as a passage of an induced current, and the rotor core and the rotor bushing are inserted into the rotor frame and injection molded, to form one body.

Preferably, the rotor frame includes a plurality of air holes in a lower surface in a circumferential direction at regular intervals.

Preferably, the rotor frame further includes a blade in the vicinity of each of the air holes.

Both the air holes and the blades are formed in a direction away from a radial direction of the rotor frame by a predetermined angle.

The rotor frame includes a plurality of air holes in a sidewall in a circumferential direction at regular intervals.

Preferably, the rotor frame includes a plurality of blades of predetermined heights formed at a top portion.

The rotor frame includes a plurality of gear teeth in a circumferential direction at regular intervals around the rotor bushing at a center of the lower surface of the rotor frame.

The rotor frame includes a plurality of strength reinforcing ribs formed thereon.

The strength reinforcing ribs are formed at least one of an outside surface, and inside surface of the lower surface of the rotor frame.

The strength reinforcing ribs are extended in a radial direction so as to be arranged in a radial pattern.

The winding portion of the rotor core includes an upper end ring and a lower end ring at an upper end and a lower end of the core portion respectively, and lead lines connected between the upper end ring and the lower end ring.

The motor further includes a plurality of blades of predetermined heights along a circumferential direction of the upper end ring of the rotor core, and the upper end ring and the blades are injection molded as one body.

The rotor frame includes gap verifying means for verifying a gap 'G' between the rotor core and the stator.

The gap verifying means is air holes in the lower surface of the rotor frame extended to a region under the gap 'G' or air holes in the sidewall of the rotor frame extended to the region under the gap `G'.

The stator includes an annular core of a stack of a plurality of steel pieces, a coil wound on the core and connected to an AC power source, and insulators mounted to cover an upper side and a lower side of the core, for performing an insulating function.

In the meantime, in another aspect of the present invention to achieve the object of the present invention, a motor for a washing machine includes a stator, and a rotor mounted to an outer side of the stator for rotating by an electromagnetic force between the stator and the rotor, wherein the rotor includes a rotor frame of plastic mounted to surround both an outer circumferential surface of the stator and a lower surface of the stator, a rotor core disposed on an inside circumferential surface of a sidewall of the rotor frame for generating a rotating power by an electromagnetic force between the stator and rotor core, and a rotor bushing of a metal at a center of a lower surface of the rotor frame, wherein the rotor core includes an annular core portion of a stack of a plurality of steel pieces, and a winding portion on the core portion for serving as a passage of an induced current, the rotor core and the rotor bushing are inserted into the rotor frame and injection molded, to form one body, and the rotor frame includes a plurality air holes in a lower surface and a sidewall, and gap verifying means for verifying a gap 'G' between the rotor core and the stator.

Preferably, the motor further includes blades in the vicinity of the air holes respectively.

The air holes and the blades are formed in a direction away from a radial direction of the rotor frame by a predetermined angle.

The rotor frame includes a plurality of blades of predetermined heights at a top portion of the rotor frame.

The rotor frame includes a plurality of gears around the rotor bushing in a circumferential direction at a center of a lower surface of the rotor frame selectively engagable with an inner tub.

### [Advantageous Effects]

The present invention provides a rotor having a rotor frame, a rotor core and a rotor bushing formed as one body.

Accordingly, the rotor has a simple structure, and is easy to fabricate.

Moreover, the injection molding of the rotor of plastic having a good insulating performance permits to reduce weight of the rotor, and insulate between the rotor core and a rotating shaft by the rotor frame.

Moreover, in other point of view, the formation of the rotor frame and the rotor bushing as one body to perform insulation permits to dispense with a flange portion in the related art rotor bushing.

Furthermore, only by changing a mold structure for injection molding the rotor, since the plurality of side air holes and the lower air holes are formed in the sidewall and the lower surface of the rotor frame, and the plurality of top blades are formed at the top of the rotor frame, the cooling performance of the lower portion and the upper portion of the motor is improved.

### [Description of Drawings]

FIG. 1 illustrates a section of a washing machine having a related art motor applied thereto;
FIG 2 illustrates an exploded perspective view of a related art motor in FIG. 1;
FIG 3 illustrates a section of a washing machine having a motor in accordance with a preferred embodiment of the present invention applied thereto;
FIG 4 illustrates a perspective view showing key parts of FIG 3;
FIG. 5 illustrates a section showing key parts of FIG. 3;
FIG 6 illustrates a section across an A-A line in FIG 4;
FIG 7 illustrates an exploded perspective view of a motor for a washing machine in accordance with a preferred embodiment of the present invention;
FIG. 8 illustrates an exploded perspective view of the rotor in FIG. 7; and
FIG. 9 illustrates a back view of the rotor in FIG. 8.

### [Best Mode]

Embodiments of the present invention will be described with reference to the attached drawings.

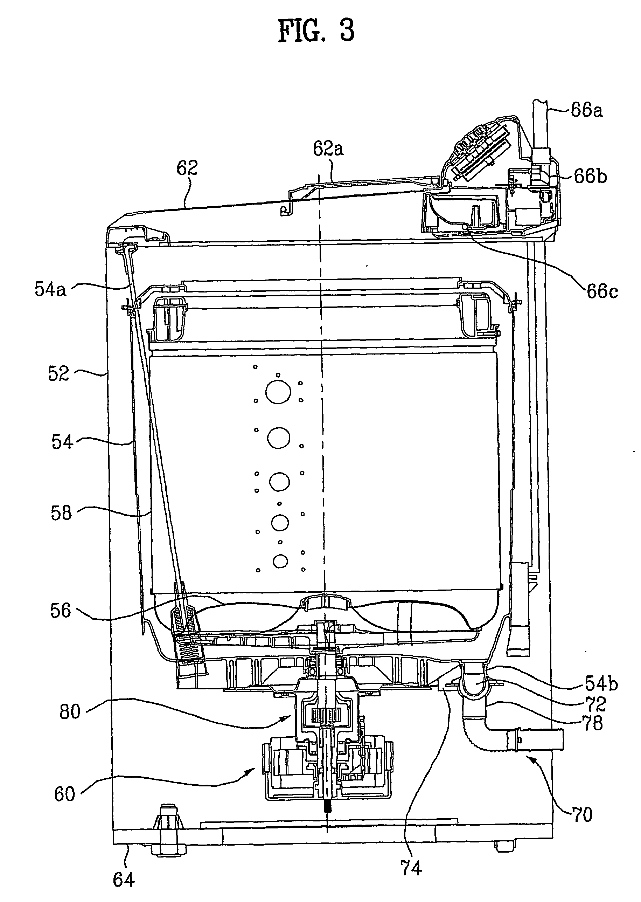

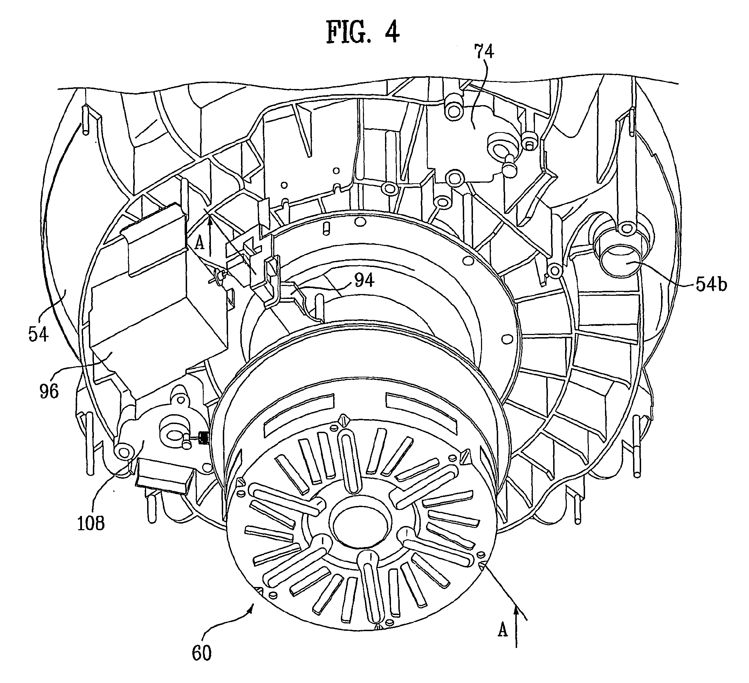

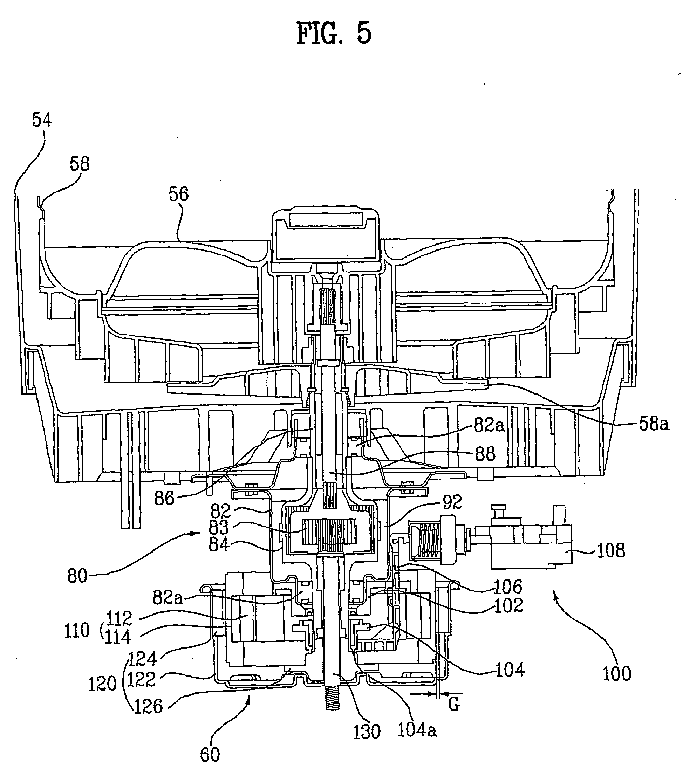

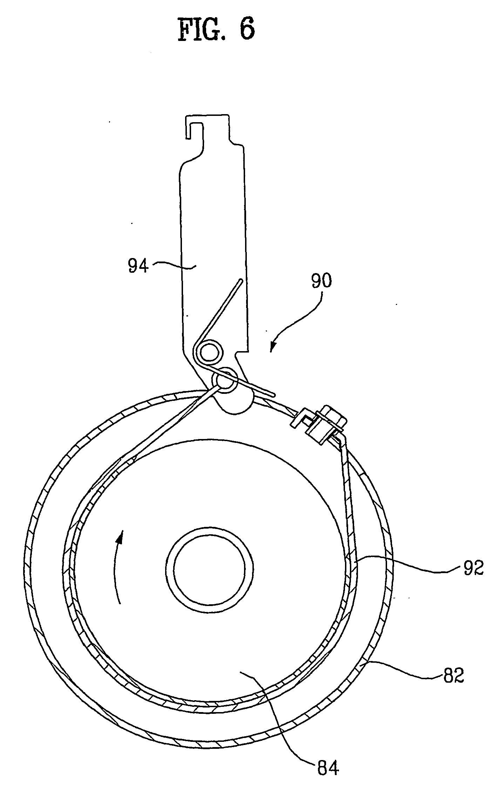

FIG. 3 illustrates a section of a washing machine having a motor in accordance with a preferred embodiment of the present invention applied thereto, FIG. 4 illustrates a perspective view showing key parts of FIG. 3, FIG. 5 illustrates a section showing key parts of FIG. 3, and FIG 6 illustrates a section across an A-A line in FIG. 4.

Referring to FIGS. 3 to 6, the washing machine includes a cabinet 52 forming an exterior thereof, an outer tub 54 suspended in the cabinet 52 with supporting members 54a, having a space therein for holding washing water, an inner tub 58 rotatably mounted in the outer tub 54, having a pulsator 56 mounted on a bottom, and water holes in an sidewall, a motor 60 under the outer tub 54 for providing driving force for rotating the pulsator 56 and the inner tub 58, and a power transmission unit 80 between the motor 60 and the outer tub 54 for connecting/disconnecting driving force transmitted to the pulsator 56 and the inner tub 58 selectively.

On the top of the cabinet 52, there is a top cover 62 having a laundry opening for introducing/taking out laundry to/from the washing machine, and under the cabinet 52, there is a base 64 having supporting legs provided thereto for supporting the washing machine. On the top cover 62, there is a lid 62a rotatably mounted for opening/closing the laundry opening, and at one side of the top cover 62, there is a water supply unit 66 for supplying water into the washing machine in supplying water.

The water supply unit 66 includes a water supply hose 66a for supplying washing water from an outside of the washing machine, and a water supply valve 66b for cutting off washing water supplied to the water supply hose 66a, and, in a water supply flow passage, there is a detergent box 66c such that detergent is washed away toward the outer tub 54 by water passed through the water supply valve 66b.

. The outer tub 54 has a drain unit 70 at a lower portion for discharging washing water held in the outer tub 54 to an outside of the washing machine.

The drain unit 70 includes a drain valve 72 having one end in communication with a drain hole 54b in the outer tub 54, a drain motor 74 on an underside of the outer tub 54 for controlling opening/closing of the drain valve 72, and a drain hose 78 in communication with the other end of the drain valve 72 for guiding washing water drained through the drain valve 72 to an outside of the washing machine.

The drain hole 54b is formed in a bottom of the outer tub 54 so as to be in communication with an inside of the outer tub 54, and the drain motor 74 is coupled to the drain valve 72 with separate connecting members.

The motor 60 is an Induction Motor of an Outer Rotor Type to which an AC power is supplied, and has a speed reduced by the power transmission unit 80, appropriately.

In the meantime, the power transmission unit 80 includes a housing 82 mounted to a center of an underside of the outer tub 54, having an underside with a stator of the motor 60 fixedly secured thereto, a drum 84 rotatably mounted in the housing 82, having a planetary gear 83 therein for reducing a speed of the motor 60, a hollow spin shaft 86 having a lower end press fit in the drum 84, and an upper end connected to the inner tub 58, a washing shaft 88 rotatably mounted in the hollow spin shaft 86, having a lower end engaged with the planetary gear 83 and an upper end connected to the pulsator 56, a brake mechanism 90 mounted to the housing 82 for braking the power transmission unit 80, and a clutch mechanism 100 under the drum 84 for connecting/disconnecting power transmission between the motor 60 and the drum 84.

On an upper side and a lower side of the housing 82, there are bearings 82a for rotatably supporting the drum 84 and the spin shaft 86 respectively, and at a lower portion of an inside of the drum 84, there is a rotating shaft 130 of the motor 60 rotatably mounted thereon.

The rotating shaft 130 has an upper end engaged with the planetary gear 83 in the drum 84, and between the drum 84 and the rotating shaft 130, and between the spin shaft 86 and the washing shaft 88, there are oiless bearings, too.

The spin shaft 86 has an upper end connected to an inner tub hub 58a fixedly secured to a bottom of the inner tub 58, and a lower end press fit in an upper portion of the drum 84. The spin shaft 86 mounted thus is to transmit power of the motor 60 from the drum 84 transmitted thereto by the clutch mechanism 100 to the inner tub 58.

Referring to FIG. 6, the brake mechanism 90 includes a brake band 92 having one end secured to the housing 82, and arranged to surround an outside circumference of the drum 84, a brake lever 94 having the other end of the brake band 92 connected thereto with a hinge, and rotatably mounted to the housing 82, and a brake motor 96 (see FIG 4) connected to the brake lever 94 so that the brake band 92 tightens an outside circumference of the drum 84.

The brake motor 96 (see FIG 4) is mounted on an underside of the outer tub 54, for applying a force higher than a predetermined value to the brake lever 94 to forcibly stop the drum 84 by the brake band 92. Accordingly, it is required that the brake motor 96 has an adequate capacity so that the brake band 92 can secure an adequate braking power for braking the drum 84.

The clutch mechanism 100 includes a coupling stopper 102 fixedly secured to an underside of the housing 82, a clutch coupling 104 connected to a lower end of the drum 84 with a spline to be movable up/down, a clutch lever 106 rotatably mounted on the clutch stopper 102, having one end connected to the clutch coupling 104, and a clutch motor 108 connected to the other end of the clutch lever 106, for connecting/disconnecting power transmission between the clutch coupling 104 and the motor 60.

The clutch coupling 104 includes a first clutch gear 104a projected form a lower surface for engagement with a second clutch gear 166 on the motor 60, and connected to the drum 84 of the clutch mechanism 100 with a spline to be movable up/down.

The clutch lever 106 has one end connected to the clutch coupling 104, the other end connected to the clutch motor 108, and a middle of the one end and the other end rotatably connected to the coupling stopper 102 with a hinge.

The clutch motor 108 is mounted on an underside of the outer tub 54 for moving the clutch lever 106 such that the clutch coupling 104 moves up/down along a lower portion of the drum 84.

That is, when the clutch lever 106 is rotated by the clutch motor 108, the clutch coupling 104 is slid up/down along the lower portion of the drum 84 by the clutch lever so that the clutch coupling 104 is engaged with the motor 60 or the coupling stopper 102.

The operation of the washing machine of the present invention will be described.

Upon application of power to the washing machine to drive the motor 60, power is transmitted form the motor 60 to the power transmission unit 80 through the rotating shaft 130, and, as the pulsator 56 or the inner tub 58 is driven selectively by the power transmission unit 80, washing, rinsing, and spinning cycles are progressed.

In detail, in a case it is intended to operate only the pulsator 56 to perform the washing, and the rinsing cycles, the clutch coupling 104 of the power transmission unit 80 is moved up by the clutch motor 108 and the clutch lever 106 to decouple the motor 60 and the drum 84.

That is, if the clutch motor 108 moves the clutch lever 106 such that the clutch coupling 104 moves up along the lower portion of the drum 84, the first clutch gear 104a of the clutch coupling 104 is disengaged from the second clutch gear 166 of the motor 60, the clutch mechanism 100 can not transmit power from the motor 60 to the clutch coupling 104.

Accordingly, power is transmitted from the motor 60 only to the planetary gear 83 in the drum 84 through the rotating shaft 130, and, therefrom to the washing shaft 88 after a speed thereof is reduced by the planetary gear 83 appropriately, to perform washing or rinsing as the pulsator 56 is rotated by the washing shaft 88.

During washing or rinsing, the drain unit 70 discharges washing water used for washing or rinsing to an outside of the washing machine, and the water supply unit 66 supplied water to the washing machine.

That is, as the water supply valve 66b of the water supply unit 66 is opened/closed, water is supplied to the outer tub 54 of the washing machine through the water supply hose 66a, and as the drain valve 72 is opened/closed by the drain motor 74 of the drain unit 70, the washing water is drained from the outer tub 54 to an outside of the washing machine through the drain valve 72 and the drain hose 78.

Opposite to this, in a case both the pulsator 56 and the inner tub 58 are driven at the same time, to perform spinning to extract water from the laundry, the clutch coupling 104 is moved down by the motor 108 and the clutch lever 106, the power transmission unit 80 couples the motor 60 and the drum 84.

That is, if the clutch motor 108 moves the clutch lever 106 such that the clutch coupling 104 moves down along the lower portion of the drum 84, the first clutch gear 104a of the clutch coupling 104 is engaged with the second clutch gear 166, to enable power transmission from the motor 60 to the clutch coupling 104.

According to this, power is transmitted from the motor 60 to the planetary gear 83 in the drum 84 through the rotating shaft 130, and, at the same time with, to the drum 84 through the clutch coupling 104, the drum 84 and the rotating shaft 130 rotate at the same speed.

In this instance, since the drum 84 and the rotating shaft 130 rotate at the same speed together, a speed reducing function of the planetary gear 83 in the drum 84 is effective no more, such that the drum 84 and the rotating shaft 130 rotate at a high speed.

If the power is transmitted from the motor 60 to the drum 84 and the rotating shaft 130 at the same time thus, the rotating shaft 130 and the planetary gear 83 rotate the washing shaft 88, and the drum 84 rotates the spin shaft 86, such that the pulsator 56 and the inner tub 58 are rotated by the washing shaft 88 and the spin shaft 86.

In the meantime, if the lid 62a is opened by the user in the middle of spinning, the power transmission unit 80 brakes rotation of the drum 84 by means of the brake mechanism 90, to prevent accident from occurring by negligence of safety caused by spinning pulsator 56 and the inner tub 58.

That is, in the spinning when the pulsator 56 and the inner tub 58 rotate at a high speed, if the lid 62a is opened, the brake lever 94 is pulled by the brake motor 96 of the brake mechanism 90, to tighten the brake band 92 on the outside circumference of the drum 84, to stop rotation of the drum 84 by friction between the drum 84 and the brake band 92.

Thus, when rotation of the drum 84 is braked, rotation of the spin shaft 86 and the washing shaft 88 stop, to stop rotation of the inner tub 58 and the pulsator 56, accordingly.

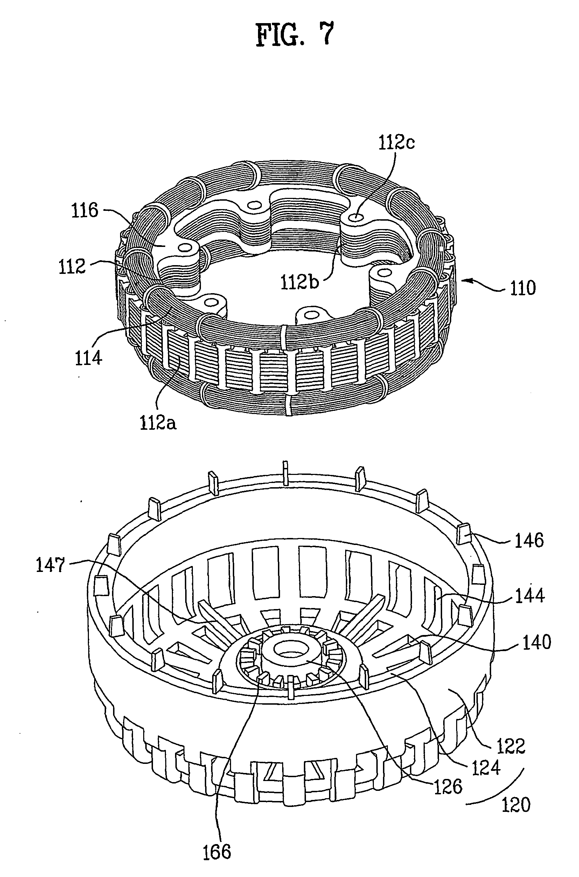

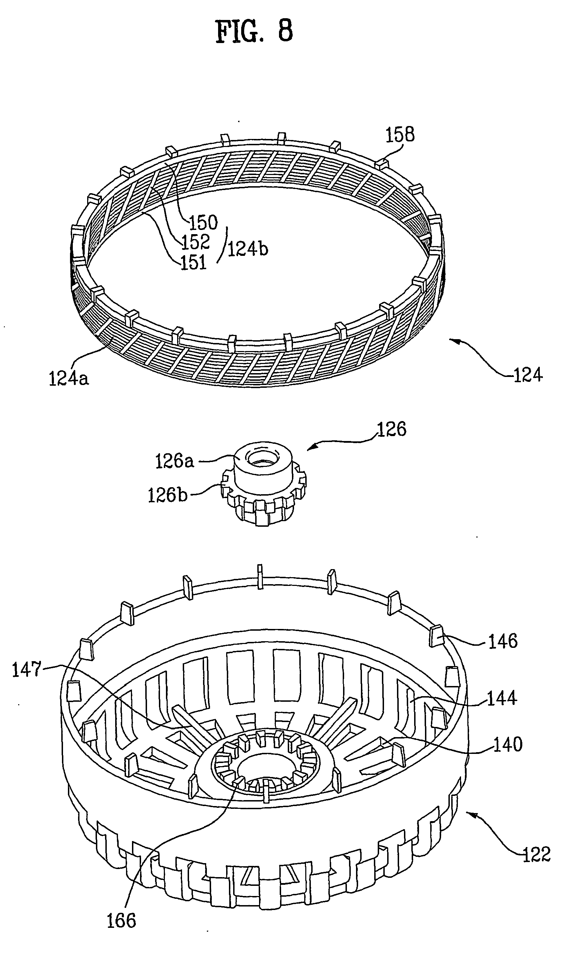

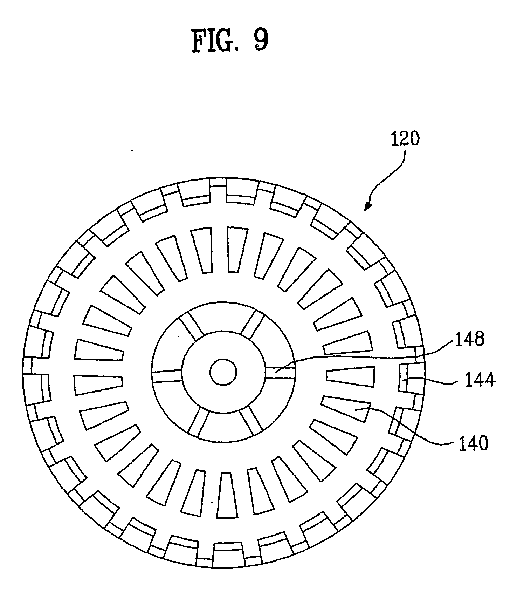

FIG. 7 illustrates an exploded perspective view of a motor for a washing machine in accordance with a preferred embodiment of the present invention, FIG. 8 illustrates an exploded perspective view of the rotor in FIG. 7, and FIG. 9 illustrates a back view of the rotor in FIG. 8.

Referring to FIGS. 5, and 7 to 9, the motor for a washing machine in accordance with a preferred embodiment of the present invention includes a stator 110 fixedly secured to an underside of housing 82 of a power transmission unit 80, a rotor 120 mounted to surround an outside of the stator 110, for being rotatable by electromagnetic force generated with respect to the stator 110, and a rotating shaft 130 rotatably arranged in a drum 84, having a lower end fixedly secured to the rotor 120, an upper end engaged with a planetary gear 83 of the power transmission unit 80.

The stator 110 includes an annular core 112 having a stack of a plurality of steel pieces, a coil 114 wound on the core 112 and connected to an AC power source, and insulators 116 mounted to cover an upper side and a lower side of the core 112, for performing an insulating function.

The core 112 includes a plurality of Ts 112a each projected from an outside circumference for winding the coil 114 thereon, and a plurality of fastening portions 112b each projected from an inside circumference for fastening to the housing 82 of the power transmission unit 80 with a fastening bolt (not shown). The plurality of Ts 112a are formed at regular intervals on the outside circumference of the core 112, and the plurality of fastening portions 112b are formed on an inside circumference of the core 112 at regular intervals, and each of the fasting portions 112b has a fastening hole 112c for fastening with a fastening bolt.

A plurality of the coils 114 are wound along a circumference of the core 112, with each of the coils 114 wound on two of the plurality of Ts 112a, and bound to an upper surface and a lower surface of the core 112 along the circumference of the core 112. accordingly, as the coils 114 are arranged on the upper surface and the lower surface of the stator 110, a diameter of the motor 60 is reduced.

The rotor 120 includes a rotor frame 122 mounted to surround an outside circumferential surface and an underside surface of the stator 110, a rotor core 124 formed on an inside circumferential surface of a sidewall of the rotor frame 122 as one body with the rotor frame 122 so as to be rotatable by electro-magnetic force acting with respect to the stator 110, and a rotor bushing 126 formed on a center of a lower surface of the rotor frame 122 as one body with the rotor frame 122, for fastening a lower end of the rotating shaft 130 thereto.

The rotor frame 122 of a plastic injection molding has a cylindrical shape with an opened top in overall. Since the rotor core 124 is insert injection molded at the inside circumferential surface of the rotor frame 122, and the rotor bushing 126 is insert injection molded at the center of the lower surface of the rotor frame 122, the rotor core 124, and the rotor bushing 126 are formed as one body with the rotor frame 122.

Accordingly, the rotor 120, not only requires no separate assembly members, or assembly structure for assembling and securing the rotor core 122 and the rotor bushing 126 to the rotor frame 122, but also can secure the rotor core 124 and the rotor bushing 126 to the rotor frame 122, rigidly.

In the meantime, the rotor frame 122 includes air holes and blades for preventing temperature rise of the motor 60 by introducing external air into the motor 60. That is, an internal temperature of the motor 60 rises due to electromagnetic heat loss of the motor 60 when the motor 60 is driven, cooling of the motor 60 is required so that performance of the motor 60 does not become poor.

Accordingly, at the lower surface of the rotor frame 122, there are lower air holes 140 for cooling a lower portion of the motor 60, at a side surface of the rotor frame 122, there are side air holes 144 for improving the cooling performance of the lower air holes 140, and at a top portion of the rotor frame 122, there are upper blades 146 for cooling the upper portion of the motor 60.

The lower air holes 140 are arranged in a radial pattern in the lower surface of the rotor frame 122 around the rotor bushing 126. That is, the lower air holes 140 are formed between the portion having the rotor bushing 126 insert injection molded thereon and the side of the rotor frame 122 extended in a radial direction of the rotor frame 122 at regular intervals in a circumferential direction of the rotor frame 122.

Of course, for increasing the air flow rate drawn through the lower air holes 140, lower blades (not shown) may be formed projected upward from one side of each of the lower air holes 140. In formation of the lower blades at the lower air holes 140, if the lower air holes 140 and the lower blades are formed in a direction away from a radial direction of the rotor frame 122 by an angle (i.e., a line drawn in a length direction of the lower air hole or the lower blade is not positioned parallel to or on the same line with an axis line in the radial direction), the air flow rate blown by the lower air holes 140 and the lower blades increase when the rotor 120 rotates.

The side air holes 144 are formed between the lower surface of the rotor frame 122 and the rotor core 124 at regular intervals along the side of the rotor frame 122 for discharging air drawn through the lower air holes 140.

Since the side air holes 144 are at positions higher than the lower surface of the rotor frame 122, bringing the air drawn through the lower air holes 140 into contact with various portions of the lower portion of the motor 60 naturally in a process the air is discharged through the side air holes 144, the cooling performance of the lower portion of the motor 60 is enhanced.

In the meantime, since the air drawn through the lower air holes 140 is discharged through the side air holes 144, almost no air drawn through the lower air holes 140 is blown toward the upper portion of the motor 60, cooling of the upper portion of the motor 60 can not be achieved.

Consequently, upper blades 146 are projected upwardly from a top portion of the rotor frame 122 for blowing external air to the upper portion of the motor 60 when the motor 60 is driven.

The upper blades 146 are extended in a radial direction of the rotor frame 122 at regular intervals along the top portion of the rotor frame 122.

Of course, if the upper blades 158 are insert injection molded at the upper end ring 150 of the rotor core 124, formation of the upper blades 146 is not required at the injection molding of the rotor frame 122.

In the meantime, at the lower surface and the outside surface of the rotor frame 122, ribs 147, and 148 may be formed respectively, for reinforcing the rotor frame 122 so that the rotor frame 122 does not distort or deform into an ellipse by centrifugal force when the rotor frame 122 rotates at a high speed. That is, the ribs 147, and 148 are formed at weak portion of the rotor frame 122 in view of structure, for improving strength of the rotor frame 122, to enhance rigidity of the rotor frame 122.

The lower air holes 140, the lower blades (not shown), the side air holes 144, the upper blades 146, and the ribs 147, and 148 at the rotor frame 122 may be formed together with the rotor frame 122 readily in predetermined shapes at various positions as a structure of a mold for injection molding the rotor 120 varies at the time of injection molding of the rotor frame 122.

The rotor core 124 includes an annular core portion 124a of a stack of a plurality of steel pieces, and a winding portion 124b on the core portion 124a for serving as a passage of an induction current. The winding portion 124b includes an upper end ring 150 and a lower end ring 151 at an upper end and a lower end of the core portion 124a respectively, and lead lines 152 connected between the upper end ring 150 and the lower end ring 151.

The rotor core 124 is insert injection molded at a side surface of the rotor frame 122 such that the rotor core 124 rotates as one body 122 with the rotor frame 122.

The rotor core 124 has an inside diameter greater than an outside diameter of the stator 110 so that a fixed size of gap 'G' is formed between the rotor core 124 and the stator 110.

Though efficiency of the motor 60 becomes the higher as the gap 'G' is formed the smaller, the rotor 120 is liable to hit the stator 110 if the size of the gap 'G' is too small, design, fabrication, and maintenance of the motor is required so that there is always an optimal gap 'G' between the rotor core 124 and the stator 110.

Accordingly, there are gap verifying means at the lower surface of the rotor frame 122, for smooth verification of the gap `G'.

As the gap verifying means, one of the lower air holes 140 and the side air holes 144 are extended to a region under the gap 'G', or a plurality of gap verifying holes are formed in the region under the gap `G', additionally.

The rotor bushing 126 is a member connected to a lower end of the rotating shaft 130, in general, formed of metal, and is insert injection molded with the rotor frame 122 to rotate together with the rotor frame 122. Therefore, as the rotor bushing 126 and the rotor core 124 are insulated by the rotor frame 122 of plastic, current conduction toward the inner tub 58 through the rotating shaft 130 connected to the rotor bushing 126 is prevented.

In the meantime, the rotor bushing 126 includes a cylindrical hub portion 126a, and a projection portion 126b of a gear teeth shape extended and projected from an outside circumferential surface of the hub portion for enhancing joining force with plastic at the time the rotor frame is injection molded.

At a center of an inside bottom surface of the rotor frame 122, there is a second clutch gear 166 projected upward for engagement with the first clutch gear 104a at the clutch coupling 104. The second clutch gear 166 is formed around the rotor bushing 126 in a circumferential direction thereof at regular intervals.

The operation of the motor for a washing machine of the present invention, and a method for fabricating the rotor will be described.

Upon application of AC power to the motor 60, a current flows to the coil 114 on the stator 110, to form a rotating magnetic field at the stator 110 and an induction current at the rotor core 124 of the rotor 120.

Owing to interaction between the rotating magnetic field and the induction current between the stator 110 and the rotor core 124, rotating force is generated to rotate the rotor 120, and rotation force of the rotor 120 is transmitted to the power transmission unit 80 through the rotating shaft 130.

That is, since the rotor core 124 and the rotor bushing 126 are formed as one body with the rotor frame 122, the rotor frame 122 and the rotor bushing 126 rotate as a unit with the rotor frame 122 following rotation of the rotor core 124, and the fall off of the rotor core 124 by the rotation force of the rotor 120 is prevented from the source.

When the rotor 120 rotates by the interaction of the rotating magnetic field and the induction current, external air is drawn though the lower air holes 140 in the rotor frame 122, and blown to lower portions of the stator 110 and the rotor core 124, to cool the lower portion of the motor 60.

Then, the air cooled the lower portion of the motor 60 is discharged to an outside of the motor 60 through the aide air holes 144 in a side surface of the rotor frame 122.

Since the side air holes 144 are positioned higher than the lower surface of the rotor frame 122, an air flow path between the lower air holes 140 and the side air holes 144 is moved up toward the stator 110 and the rotor core 124, to increase a contact area between the motor 60 and the external air.

Thus, as the upper portion and the lower portion of the motor 60 are cooled by the upper blades 146 and the lower air holes 140, the cooling performance of the motor 60 increases to improve efficiency of the motor 60.

Though the rotor frame 122 is liable to deform by a high centrifugal force if the rotor 120 rotates at a high speed, since the plurality of ribs 147, and 148 at the rotor frame 122 reinforce the rotor frame 122 to enhance a rigidity of the rotor 120, deformation of the rotor 120 caused by the centrifugal force is prevented.

As the manufacturer or the service man can verify the gap 'G' between the stator 110 and the rotor 120 through the plurality of air holes 140, and 144 or the separate gap verifying holes in the lower surface of the rotor frame 122, non-uniformity of the gap `G' can be known, readily.

That is, if a size of the gap 'G' between the stator 110 and the rotor 120 varies with positions, leading to vary distribution of interactive force between the stator 110 and the rotor core 124 with the positions of the gap 'G', the rotor 120 and the stator 110 to collide with each other, or the motor efficiency to drop, the size of the gap 'G' is inspected, and verified, for securing a performance of the motor 60.

In the method for fabricating a rotor 120 of the motor of the present invention, after fabricating an injection molding mold having the lower air holes 140, the side air holes 144, the upper blades 146, the ribs 147, and 148, the second clutch gear, and so on, an injection molding is made with the mold in a state the rotor core 124 and the rotor bushing 126 are inserted therein, to fabricate the rotor 120.

In this instance, as a material of the injection molding, plastic having good insulating performance and strength is used, to insulate between the rotor core 124 and the rotor bushing 126 with the rotor frame 122, and a total weight of the reduced, too.

Once the rotor bushing 126 is insulated fully by the rotor frame 122, such that no current flows to the rotating shaft 130, danger of occurrence accidents of electric shock is reduced, and the motor efficiency increases as the weight of the rotor 120 is reduced.

## Claims

1. A motor (60) for a washing machine comprising:
a stator (110); and
a rotor (120) mounted to an outer side of the stator (110) for rotating by an electromagnetic force between the stator (110) and the rotor (120),
wherein the rotor (120) includes;
a rotor frame (122) of plastic mounted to surround the stator (110);
a rotor core (124) disposed on an inside circumferential surface of a sidewall of the rotor frame (122) for generating a rotating power by an electromagnetic force between the stator (119) and rotor core (124), and
a rotor bushing of a metal at a center of a lower surface of the rotor frame (122)
**characterized in that** the rotor core (124) includes;
an annular core portion (124a) of a stack of a plurality of steel pieces, and
a winding portion (124b) on the core portion for serving as a passage of an induced current, and
the rotor core (124) and the rotor bushing (126) are inserted into the rotor frame (122) and injection molded, to form one body.

2. The motor (60) as claimed in claim 1, wherein the rotor frame includes a plurality of air holes (140,144) in a circumferential direction at regular intervals.

3. The motor as claimed in claim 2, wherein the rotor frame (122) further includes a blade in the vicinity of each of the air holes (140,144).

4. The motor (60) as claimed in claim 3, wherein both the air holes (140,144) and the blades are formed in a direction away from a radial direction of the rotor frame (122) by a predetermined angle.

5. The motor (60) as claimed in claim 1, wherein the rotor frame (122) includes a plurality of air holes (140,144) in a sidewall in a circumferential direction at regular intervals.

6. The motor (60) as claimed in claim 1, wherein the rotor frame includes a plurality of blades (146) of predetermined heights formed at a top portion.

7. The motor (60) as claimed in claim 1, wherein the rotor frame (122) includes a plurality of gear teeth (166) in a circumferential direction at regular intervals around the rotor bushing at a center of the lower surface of the rotor frame (122).

8. The motor as claimed in claim 1, wherein the rotor frame (122) includes a plurality of strength reinforcing ribs (147,148) formed thereon.

9. The motor as claimed in claim 8, wherein the strength reinforcing ribs (147,148) are formed at least one of an outside surface, and inside surface of the lower surface of the rotor frame (122).

10. The motor (60) claimed in claim 9, wherein the strength reinforcing [Claim 10] The motor as claimed in claim 9, wherein the strength reinforcing ribs (147,148) are extended in a radial direction so as to be arranged in a radial pattern.

11. The motor (60) as claimed in claim 1, wherein the winding portion of the rotor core includes;
an upper end ring and a lower end ring at an upper end and a lower end of the core portion respectively, and
lead line (152) connected between the upper end ring and the lower end ring (151).

12. The motor (60) as claimed in claim 9, further comprising a plurality of blades of predetermined heights along a circumferential direction of the upper end ring (150) of the rotor core (124).

13. The motor (60) as claimed in claim 12, wherein the upper end ring and the blades (158) are injection molded as one body.

14. The motor (60) as claimed in claim 1, wherein the rotor frame (122) includes gap verifying means for verifying a gap 'G' between the rotor core (124) and the stator (110).

15. The motor (60) as claimed in claim 14, wherein the gap verifying means is air holes (140) in the lower surface of the rotor frame extended to a region under the gap 'G' or air holes in the sidewall of the rotor frame extended to the region under the gap 'G'.

16. The motor (60) as claimed in claim 1, wherein the stator (110) includes;
an annular core (112) of a stack of a plurality of steel pieces,
a coil (114) wound on the core (112) and connected to an AC power source, and
insulators (116) mounted to cover an upper side and a lower side of the core (112), for performing an insulating function.

17. The motor as claimed in claim 1, wherein the rotor frame includes;
a plurality air holes (140,144) in a lower surface and a sidewall, and
gap verifying means for verifying a gap 'G' between the rotor core (124) and the stator (110).

18. The motor (60) as claimed in claim 17, further comprising blades in the vicinity of the air holes (140,144) respectively.

19. The motor (60) as claimed in claim 18, wherein the air holes (140,144) and the blades are formed in a direction away from a radial direction of the rotor frame (122) by a predetermined angle.

20. The motor as claimed in claim 17, wherein the rotor frame includes a plurality of blades of predetermined heights at a top portion of the rotor frame.

## Patentansprüche

1. Motor (60) für eine Waschmaschine, der aufweist:
einen Ständer (110); und
einen an einer Außenseite des Ständers (110) angeordneten Läufer (120) zum Drehen durch eine elektromagnetische Kraft zwischen dem Ständer (110) und dem Läufer (120),
wobei der Läufer (120) aufweist:
einen Läuferrahmen (122) aus Kunststoff, der so angeordnet ist, dass er den Ständer (110) umgibt,
einen in einer Innenumfangsfläche einer Seitenwand des Läuferrahmens (122) angeordneten Läuferkern (124) zum Erzeugen einer Drehleistung durch eine elektromagnetische Kraft zwischen dem Ständer (110) und dem Läuferkern (124), und
eine Läuferbuchse (126) aus einem Metall in einer Mitte einer Unterseite des Läuferrahmens (122),
**dadurch gekennzeichnet, dass** der Läuferkern (124) aufweist:
einen ringförmigen Kernabschnitt (124a) aus einem Stapel aus mehreren Stahlstücken, und
einen Windungsabschnitt (124b) auf dem Kernabschnitt zum Dienen als Durchgang eines induzierten Stroms, und
der Läuferkern (124) und die Läuferbuchse (126) in den Läuferrahmen (122) eingesetzt und so spritzgegossen sind, dass sie einen Körper bilden.

2. Motor (60) nach Anspruch 1, wobei der Läuferrahmen (122) mehrere Luftlöcher (140, 144) in Umfangsrichtung in regelmäßigen Abständen aufweist.

3. Motor (60) nach Anspruch 2, wobei der Läuferrahmen (122) ferner einen Flügel in der Umgebung jedes der Luftlöcher (140, 144) aufweist.

4. Motor (60) nach Anspruch 3, wobei sowohl die Luftlöcher (140, 144) als auch die Flügel in einer Richtung gebildet sind, die von einer Radialrichtung des Läuferrahmens (122) in einem vorbestimmten Winkel wegführt.

5. Motor (60) nach Anspruch 1, wobei der Läuferrahmen (122) mehrere Luftlöcher (140, 144) in einer Seitenwand in Umfangsrichtung in regelmäßigen Abständen aufweist.

6. Motor (60) nach Anspruch 1, wobei der Läuferrahmen (122) mehrere Flügel (146) mit vorbestimmten Höhen aufweist, die an einem oberen Abschnitt gebildet sind.

7. Motor (60) nach Anspruch 1, wobei der Läuferrahmen (122) mehrere Zahnradzähne (166) in Umfangsrichtung in regelmäßigen Abständen um die Läuferbuchse in einer Mitte der Unterseite des Läuferrahmens (122) aufweist.

8. Motor (60) nach Anspruch 1, wobei der Läuferrahmen (122) mehrere darauf gebildete Verstärkungsrippen (147, 148) aufweist.

9. Motor (60) nach Anspruch 8, wobei die Verstärkungsrippen (147, 148) auf einer Außenfläche und/oder Innenfläche der Unterseite des Läuferrahmens (122) gebildet sind.

10. Motor (60) nach Anspruch 9, wobei sich die Verstärkungsrippen (147, 148) in Radialrichtung so erstrecken, dass sie in einem Radialmuster angeordnet sind.

11. Motor (60) nach Anspruch 1, wobei der Windungsabschnitt (124b) des Läuferkerns aufweist:
einen oberen Endring (150) und einen unteren Endring (151) an einem oberen Ende bzw. einem unteren Ende des Kernabschnitts, und
Anschlussleitungen (152), die zwischen dem oberen Endring (150) und dem unteren Endring (151) verbunden sind.

12. Motor (60) nach Anspruch 9, ferner mit mehreren Flügeln (158) mit vorbestimmten Höhen entlang einer Umfangsrichtung des oberen Endrings (150) des Läuferkerns (124).

13. Motor (60) nach Anspruch 12, wobei der obere Endring (150) und die Flügel (158) als ein Körper spritzgegossen sind.

14. Motor (60) nach Anspruch 1, wobei der Läuferrahmen (122) eine Spaltprüfeinrichtung zum Prüfen eines Spalts 'G' zwischen dem Läuferkern (124) und dem Ständer (110) aufweist.

15. Motor (60) nach Anspruch 14, wobei es sich bei der Spaltprüfeinrichtung um Luftlöcher (140) in der Unterseite des Läuferrahmens, die sich zu einem Bereich unter dem Spalt 'G' erstrecken, oder um Luftlöcher (144) in der Seitenwand des Läuferrahmens handelt, die sich zum Bereich unter dem Spalt 'G' erstrecken.

16. Motor (60) nach Anspruch 1, wobei der Ständer (110) aufweist:
einen ringförmigen Kern (112) aus einem Stapel aus mehreren Stahlstücken,
eine Spule (114), die auf den Kern (112) gewickelt und
mit einer Wechselstromquelle verbunden ist, und
Isolatoren (116), die so angeordnet sind, dass sie eine Oberseite und eine Unterseite des Kerns (112) zum Durchführen einer Isolierfunktion abdecken.

17. Motor nach Anspruch 1,
wobei der Läuferrahmen (122) aufweist:
mehrere Luftlöcher (140, 144) in einer Unterseite und einer Seitenwand, und
eine Spaltprüfeinrichtung zum Prüfen eines Spalts 'G' zwischen dem Läuferkern (124) und dem Ständer (110).

18. Motor (60) nach Anspruch 17, ferner mit Flügeln jeweils in der Umgebung der Luftlöcher (140, 144).

19. Motor (60) nach Anspruch 18, wobei die Luftlöcher (140, 144) und die Flügel in einer Richtung gebildet sind, die von einer Radialrichtung des Läuferrahmens (122) in einem vorbestimmten Winkel wegführt.

20. Motor nach Anspruch 17, wobei der Läuferrahmen mehrere Flügel mit vorbestimmten Höhen an einem oberen Abschnitt des Läuferrahmens aufweist.

## Revendications

1. Moteur (60) pour une machine à laver comprenant :
un stator (110) ; et
un rotor (120) monté sur un côté extérieur du stator (110) pour permettre une rotation due à une force électromagnétique entre le stator (110) et le rotor (120),
dans lequel le rotor (120) inclut :
un châssis de rotor (122) en plastique monté de façon à entourer le stator (110),
un noyau de rotor (124) disposé sur une surface périphérique intérieure d'une paroi latérale du châssis de rotor (122) afin de générer une puissance de rotation due à une force électromagnétique entre le stator (110) et le noyau de rotor (124), et
une douille de rotor (126) constituée d'un métal en un centre d'une surface inférieure du châssis de rotor (122),
**caractérisé en ce que** le noyau de rotor (124) inclut :
une portion de noyau annulaire (124a) composée d'un empilage d'une pluralité d'éléments en acier, et
une portion d'enroulement (124b) sur la portion de noyau destinée à servir de passage à un courant induit, et
le noyau de rotor (124) et la douille de rotor (126) sont insérés dans le châssis de rotor (122) et moulés par injection, pour former un seul corps.

2. Moteur (60) selon la revendication 1, dans lequel le châssis de rotor (122) inclut une pluralité d'évents (140, 144) dans une direction périphérique à intervalles réguliers.

3. Moteur (60) selon la revendication 2, dans lequel le châssis de rotor (122) inclut en outre une ailette à proximité de chacun des évents (140, 144).

4. Moteur (60) selon la revendication 3, dans lequel les évents (140, 144) ainsi que les ailettes sont formés dans une direction s'éloignant d'une direction radiale du châssis de rotor (122) d'un angle prédéterminé.

5. Moteur (60) selon la revendication 1, dans lequel le châssis de rotor (122) inclut une pluralité d'évents (140, 144) dans une paroi latérale dans une direction périphérique à intervalles réguliers.

6. Moteur (60) selon la revendication 1, dans lequel le châssis de rotor (122) inclut une pluralité d'ailettes (146) ayant des hauteurs prédéterminées formées dans une portion supérieure.

7. Moteur (60) selon la revendication 1, dans lequel le châssis de rotor (122) inclut une pluralité de dents d'engrenage (166) dans une direction périphérique à intervalles réguliers autour de la douille de rotor en un centre de la surface inférieure du châssis de rotor (122).

8. Moteur (60) selon la revendication 1, dans lequel le châssis de rotor (122) inclut une pluralité de nervures de renforcement de la résistance (147, 148), ces dernières étant formées sur le châssis de rotor.

9. Moteur (60) selon la revendication 8, dans lequel les nervures de renforcement de la résistance (147, 148) sont formées au moins de l'une des deux surfaces suivantes, à savoir une surface extérieure ou une surface intérieure de la surface inférieure du châssis de rotor (122).

10. Moteur (60) selon la revendication 9, dans lequel les nervures de renforcement de la résistance (147, 148) s'étendent dans une direction radiale de manière à être disposées en un schéma radial.

11. Moteur (60) selon la revendication 1, dans lequel la portion d'enroulement (124b) du noyau de rotor inclut :
une bague d'extrémité supérieure (150) et une bague d'extrémité inférieure (151) à une extrémité supérieure et une extrémité inférieure respectivement de la portion de noyau, et
des câbles (152) raccordés entre la bague d'extrémité supérieure (150) et la bague d'extrémité inférieure (151).

12. Moteur (60) selon la revendication 9, comprenant en outre une pluralité d'ailettes (158) ayant des hauteurs prédéterminées le long d'une direction périphérique de la bague d'extrémité supérieure (150) du noyau de rotor (124).

13. Moteur (60) selon la revendication 12, dans lequel la bague d'extrémité supérieure (150) et les ailettes (158) sont moulées par injection pour former un seul corps.

14. Moteur (60) selon la revendication 1, dans lequel le châssis de rotor (122) inclut un moyen de vérification d'entrefer pour vérifier un entrefer 'G' entre le noyau de rotor (124) et le stator (110).

15. Moteur (60) selon la revendication 14, dans lequel le moyen de vérification d'entrefer est des évents (140) dans la surface inférieure du châssis de rotor s'étendant vers une région sous l'entrefer 'G' ou des évents (144) dans la paroi latérale du châssis de rotor s'étendant vers une région sous l'entrefer 'G'.

16. Moteur (60) selon la revendication 1, dans lequel le stator (110) inclut :
un noyau annulaire (112) composé d'un empilage d'une pluralité d'éléments en acier, et
une bobine (114) enroulée sur le noyau (112) et raccordée à une source de courant alternatif, et
des isolateurs (116) montés de façon à couvrir un côté supérieur et un côté inférieur du noyau (112), pour assurer une fonction d'isolation.

17. Moteur selon la revendication 1, dans lequel le châssis de rotor (122) inclut :
une pluralité d'évents (140, 144) dans une surface inférieure et dans une paroi latérale, et
un moyen de vérification d'entrefer pour vérifier un entrefer 'G' entre le noyau de rotor (124) et le stator (110).

18. Moteur (60) selon la revendication 17, comprenant en outre des ailettes à proximité respectivement des évents (140, 144).

19. Moteur (60) selon la revendication 18, dans lequel les évents (140, 144) et les ailettes sont formés dans une direction s'éloignant d'une direction radiale du châssis de rotor (122) d'un angle prédéterminé.

20. Moteur selon la revendication 17, dans lequel le châssis de rotor inclut une pluralité d'ailettes ayant des hauteurs prédéterminées dans une portion supérieure du châssis de rotor.
